(19) Europäisches Patentamt
European Patent Office
Office européen des brevets

(11) Publication number: 0 038 603 A2

# (12) EUROPEAN PATENT APPLICATION

(21) Application number: 81200431.5

(22) Date of filing: 14.04.81

(51) Int. Cl.[3]: A 23 J 3/00
A 23 L 1/34, A 23 L 1/195
A 23 K 1/18

(30) Priority: 17.04.80 US 141435
02.03.81 US 236740

(43) Date of publication of application:
28.10.81 Bulletin 81/43

(84) Designated Contracting States:
AT BE DE FR GB IT NL

(71) Applicant: STAUFFER CHEMICAL COMPANY

Westport Connecticut 06880(US)

(72) Inventor: Chang, Pei Kung
232 Coachlight Square
Montrose New York 10548(US)

(74) Representative: Urbanus, Henricus Maria, Ir. et al,
c/o Vereenigde Octrooibureaux Nieuwe Parklaan 107
NL-2587 BP 's-Gravenhage(NL)

## (54) Products exhibiting reduced water activity containing derived protein-containing compositions and foods comprising said products as humectants.

(57) Products exhibiting reduced water activity are disclosed comprising a derived protein-containing composition preferably codried with starch and particularly a deproteinized mineral-containing whey byproduct and starch, preferably a thin boiling modified starch. The products are effective as humectants in foods, particularly intermediate moisture foods.

EP 0 038 603 A2

Croydon Printing Company Ltd.

# PRODUCTS EXHIBITING REDUCED WATER ACTIVITY CONTAINING DERIVED PROTEIN-CONTAINING COMPOSITIONS AND FOODS COMPRISING SAID PRODUCTS AS HUMECTANTS

## BACKGROUND OF THE PRESENT INVENTION

This invention relates to products exhibiting reduced water-activity containing derived protein-containing compositions and particularly byproducts obtained from concentrating whey protein by means of ultrafiltration or gel filtration and the dried products obtained thereby.

It is well known that foods can be preserved by drying. It is also known that some foods having a moisture level between fresh and dried are stable and do not contain sufficient moisture to support bacteriological growth, i.e., cheese. Because of the recognition of this factor, a class of foods called "intermediate moisture foods" has arisen. One of the more important commercial examples of this class is semi-moist pet foods.

In order to determine if the semi-moist food will be stable, it is necessary to determine the water activity, $a_w$, of the product. Water activity is defined as the ratio of the materials' water vapor pressure to the vapor pressure of pure water at saturation in air at the temperature of the material.

This can be represented mathematically by the formula:

$$a_w = \frac{P_s}{P_o} = \frac{N_w}{N_w + N_s}$$

wherein the water activity is $a_w$, $P_s$ is the vapor pressure of water vapor in the food, $P_o$ is the vapor pressure of pure water at the same temperature, $N_w$ is moles of water and $N_s$ is moles of solute (Commercial Development of Intermediate Moisture and Food,

M. Kaplow, Food Technology, Volume 28, page 889, August 1970).

One method of determining water activity involves humidifying samples in desiccators at 37°C. to the desired water activity by using saturated salt solutions. The procedure involves placing the sample uncovered in the desiccator and leaving the sample in the desiccator to equilibrate. Moisture isotherms are prepared by determining gravimetrically the weight increase of the samples. Illustrative reference saturated salt solutions are as follows:

TABLE I

| Salt | | $a_w$ at 25°C. | $a_w$ at 30°C. |
|---|---|---|---|
| Magnesium Chloride | $MgCl_2$ | 0.328 | 0.324 |
| Potassium Carbonate | $K_2CO_3$ | 0.432 | 0.432 |
| Magnesium Nitrate | $MgNO_3$ | 0.529 | 0.514 |
| Sodium Bromide | NaBr | 0.576 | 0.560 |
| Cobalt Chloride | $CoCl_2$ | 0.649 | 0.618 |
| Strontium Chloride | $SrCl_2$ | 0.709 | 0.691 |
| Sodium Nitrate | $NaNO_3$ | 0.743 | 0.731 |
| Sodium Chloride | NaCl | 0.753 | 0.751 |
| Potassium Bromide | KBr | 0.809 | 0.803 |
| Ammonium Sulfate | $(NO_4)_2SO_4$ | 0.810 | 0.806 |
| Potassium Chloride | KCl | 0.843 | 0.836 |
| Strontium Nitrate | $Sr(NO_3)_2$ | 0.851 | |
| Barium Chloride | $BaCl_2$ | 0.902 | |
| Potassium Nitrate | $KNO_3$ | 0.936 | 0.923 |
| Potassium Sulfate | $K_2SO_4$ | 0.973 | 0.970 |

It has been reported that typical intermediate moisture foods have water contents of from 15% to 30% on a dry solids basis and water activities lower than 0.85. Fresh foods generally have more than 60% moisture and an $a_w$ of greater than 0.90. Dry foods have a moisture content of less than 15% and an $a_w$ of less than 0.20.

Three problems are connected with the stability of intermediate moisture foods, i.e., microorganisms, browning and lipid oxidation. Depressing the water activity has an inhibiting effect on the growth of microorganisms and, apparently, an antioxidant effect on lipid oxidation.

Stille (1948) has suggested an $a_w$ of 0.75 as an overall limit for most foods stored in cool environments. Mossel and Ingram (1955) have suggested an $a_w$ of 0.70 for long term storage in tropical climates. Mossel and Sand (1968) suggest inhibition of all microorganisms occurs only below $a_w$ of 0.60. It is noted that these are guidelines. Moisture isotherms shift with temperatures such that storage at a higher temperature with the same moisture content gives a higher $a_w$ than storage of the same product at lower temperature.

Water activity below which microorganism growth is inhibited is illustrated by the following though these amounts can vary:

TABLE II

| Organism | Water Activity $a_w$ |
|---|---|
| Bacteria | 0.91 |
| Yeasts | 0.88 |
| Molds | 0.80 |

(NASA CONTRACTOR REPORT, NASA CR 114,861, June 1972, Table 1, page 77).

Because the stability is dependent on available moisture and not total moisture, much research has been done in the area of humectants. In descending order of effectiveness as humectants are sodium chloride, potassium chloride, propylene glycol, glycerol, 1-3-butylene glycol, sorbitol, fructose, polyethylene glycol 400, glucose, sucrose, 42 D.E. corn syrup solids and lactose. It has also been suggested that dried whey, delactosed whey and whey protein concentrate may find utility as humectants. While sodium and potassium chloride are 2-2.5 times more effective than propylene glycol, they have not been used for humectants due to flavor problems. While propylene glycol and glycerol are highly effective as humectants, they are detectable by pets who dislike the taste. Compositions with effective water activity and good taste are needed to overcome the problems incurred in using prior art materials.

It is also known that, because of the increasing requirement for protein sources throughout the world, various processes have been recently developed to extract protein from whey. Particular reference is made to the Dienst Attebery patent, Reissue Patent No. 27,806, which discloses a method of separating protein from cheese whey by means of molecular sieve resin, more commonly known as gel filtration. Also in active use is the technique of ultrafiltration to separate and concentrate the protein from the whey. The development of the separation techniques

has also raised further processing problems. The byproducts from these processes are not easily adaptable to prevent known techniques of material handling.

In the processing of cheese whey by molecular sieve resin, a low molecular weight fraction (about 5-10% solids) is obtained which has a solids composition of mainly lactose and minerals with residual protein. The solids in this low molecular weight fraction can be described more particularly by the following typical chemical analysis.

| | |
|---|---|
| Lactose, % | 40-50 |
| Minerals, % | 25-35 |
| Protein (N x 6.38), % | 15-20 |
| Lactic Acid, % | 7-10 |
| Citric Acid, % | 3-6 |
| Fat, % | less than 1 |
| Moisture | less than 5 |
| pH | 6.6-7.2 |

Similarly, the use of ultrafiltration provides a permeate which is high in minerals and lactose. The solids in the permeate can be described more particularly by the following typical chemical analysis.

| | |
|---|---|
| Lactose, % | 70-80 |
| Minerals, % | 10-15 |
| Protein, (N x 6.38), % | 4-8 |
| Fat, % | less than 1 |
| Moisture | less than 5 |
| pH | 6-7 |

After removing the lactose by normal lactose crystallization procedures, the now delactosed permeate contains from about 40% to about 45% lactose, from about 25% to about 35% ash and from about 8%

to about 12% protein (TKN x 6.38). However, the total Kjeldahl nitrogen (TKN) is a measure of all the nitrogen in the system (protein as well as non-protein nitrogen), and this is an approximation of the total protein present. While the delactosed permeate is indicated to have 8-12% protein (TKN x 6.38), more than 60% of this protein is based on non-protein nitrogen, i.e., derived protein and amino acids. Derived protein is defined as a decomposition product of proteins that is intermediate in complexity of structure between proteins and amino acids (Hackh's Chemical Dictionary, 3rd Edition).

Two primary problems have been associated with the low molecular weight fraction and the permeate. First of all, conventional drying techniques cannot be utilized due to undesirable particle adherence to the walls. The second problem associated with these products is the undesirably high level of hygroscopicity exhibited by these products. The products, particularly delactosed permeate, rapidly pick up moisture from the air. Also, the undesirable level of hygroscopicity tends to detract from the potential use of this product in food applications. Once the package is opened, the dried particles immediately absorb moisture and cake.

It is also known to utilize the permeate and delactosed permeate in the formation of an egg albumen extender. In assignee's copending application Serial No. 970,688, the disclosure of which is incorporated herein by reference, there are disclosed egg albumen extenders comprising at least 65% by weight on a dry solids basis of a derived protein-containing composition from plant or animal sources wherein said derived protein-containing composition has a molecular weight of less than 20,000, a total Kjeldahl nitrogen content of from about 0.45% to about 2.1% of which at least 60% of the nitrogen is non-protein nitrogen, and from 0% to about 30% of a whipping aid, in combination with a member selected from the group consisting of gelatin, gelatin and a water soluble polyphosphate, a gum, and mixtures thereof. It has been found that these products are also difficult to dry when prepared from the liquid byproduct solution. Dry blending cannot be accomplished due to the difficulties in drying the byproduct solution before blending.

An improved process for drying a mineral containing aqueous protein solution is disclosed in U.S. Patent No. 3,840,996. In this patent, the low molecular weight byproduct fraction from the gel filtration of the whey is admixed with inorganic drying agents selected from the group consisting of tricalcium phosphate, dicalcium phosphate, kaolin, diatomaceous earth, silica gel, calcium silicate hydrate, or mixtures thereof and spray dried. This product is useful in flavor-enhancing various foods.

In assignee's copending application Serial No. 6,817, it is disclosed that mineral containing deproteinized whey byproduct solutions can be more effectively dried by mixing from about 5% to about 50% casein or alkali metal caseinates with the solution and codrying the solution. However, the high cost of casein and caseinates make this process economically unattractive.

It has now been found that products exhibiting reduced water activity and good flavor can be obtained using derived protein-containing compositions and particularly deproteinized mineral-containing whey byproducts of whey protein concentration.

BRIEF SUMMARY OF THE INVENTION

In accordance with the present invention it has been found that a first composition comprising a derived protein-containing composition to be defined hereinafter can be used to provide a product exhibiting reduced water activity. Preferably that first composition is codried with from about 20% to about 75% by weight starch. The first composition is defined as comprising at least 65% of a derived protein-containing composition from plant or animal sources wherein the molecular weight of said derived protein-containing composition is less than 30,000, said composition having a total Kjeldahl nitrogen content of from about 0.45% to about 2.1% of which at least 60% of the nitrogen is non-protein nitrogen, from about 0% and preferably to 35% of a member selected from the group consisting of from about 1% to about 15% gelatin; from about 1% to about 15% gelatin and from about 5% to about 25% of a water soluble polyphosphate, the additive total of gelatin and phosphate not to exceed about 35%; from about 0.5% to about 5% of a gum; and mixtures thereof; and from about 0% to about 30% of a whipping aid, all percentages being by weight based on the total dry solids weight of the aforecited ingredients in said first composition

the products of the invention include the codried blend of said first composition and starch as well as food products of reduced water activity containing the first

composition. Preferably the first composition is in the food as part of the codried blend.

The products of the invention are characterized as providing a water activity within the range of from about 0.5 to about 0.8 and preferably 0.55 to 0.75 at 30% moisture at 37°C. The products containing the derived protein-containing composition codried with starch can be dried, handled and incorporated into dry or liquid food systems. These codried products of the invention as well as the first composition are effective food humectants as well as flavor enhancers and can also be used as egg albumen extenders in soft meringues. The products of the invention are bland to slightly salty and thus contribute no flavor problems when used in foods even in large amounts.

The amounts of starch are based on the dry solids in the final dried product.

## DETAILED DESCRIPTION OF THE PRESENT INVENTION

The present invention is based on certain derived protein-containing compositions. The molecular weight for substantially all matter in the derived protein-containing composition is less than 30,000 and preferably less than 20,000. A material which has been ultrafiltered through a membrane having a molecular cut-off of 20,000 is considered less than 20,000.

As used herein, the term "derived protein containing composition" is intended to include all protein decomposition products including peptides and amino acids.

The nitrogen in the derived protein-containing composition is determined by the Kjeldahl method which determines nitrogen from all sources, and cannot differentiate between protein nitrogen and non-protein nitrogen. In the present invention, the total Kjeldahl nitrogen content in the derived protein-containing composition preferably ranges from about .45% to about 2.1% and more

preferably from about 1.1% to about 2.1% providing a total Kjeldahl protein content of from about 3% to about 13% and from about 7% to about 13% respectively. Of the total Kjeldahl nitrogen at least about 60% is non-protein nitrogen. Non-protein nitrogen is determined by adding trichloroacetic acid to a protein solution in an amount sufficient to provide about a 15% solution of trichloroacetic acid. Protein is precipitated and removed by centrifugation. The nitrogen content of the supernatant is determined by the Kjeldahl nitrogen method. The percent total non-protein nitrogen is determined by dividing the trichloroacetic acid soluble Kjeldahl nitrogen by the total Kjeldahl nitrogen content of the original solution on a dry solids basis. The non-protein nitrogen can range as high as 2.1% (all non-protein nitrogen) and preferably from about 0.66% to about 1.68%.

The percentage of Kjeldahl nitrogen and non-protein nitrogen is based on the dry weight of the derived protein containing composition. Further discussion can be found in Serial No. 970,688, ibid.

The derived protein-containing composition can be prepared from legumes, oil bearing seeds, milk or milk derived products. The derived protein-containing compositions are usually byproducts of a previous procedure used to extract an ingredient from the main source.

The legumes include any members of the pea family such as peas, soy beans and peanuts and preferably soy beans. The oil bearing material seeds include those materials from which oil is extracted such as cottonseed, safflowers, corn and the like.

The derived protein-containing compositions used in the present invention are prepared, for instance, by precipitating protein from an aqueous solution in a manner similar to cheese or soy protein isolate production. When preparing soy protein isolate, soy protein is extracted from defatted soy flour and is separated from the solution by acidifying to pH of approximately 4.6. The precipitated product is called soy protein isolate and the supernatant is termed soy whey. In the countries of the Far East, a similar product is prepared by precipitating a curd or tofu from soy milk leaving a similar soy whey. These soy wheys can be further processed to remove the higher molecular weight protein and provide a product usable in the present invention. Other such byproducts can be prepared from other legume or oil bearing seeds.

The derived protein-containing composition is preferably obtained from a dairy source, i.e., milk and milk derived products. The derived protein-containing composition prepared from a dairy source is generally the byproduct of a physical or chemical separation or fractionation of the various components in the milk or milk derived product. Such physical or chemical processes include gel permeation filtration, ultrafiltration, dialysis, electrodialysis, as well as protein precipitation processes such as cheese production, either enzyme or acid, chemical precipitation including acid addition for casein precipitation, polyphosphate, sodium lauryl sulfate or other such chemical protein precipitations.

Preferably, the derived protein-containing composition is prepared from soy or dairy whey and more preferably dairy whey which has been processed to further reduce the protein constituent therein. For instance, whey can be filtered through an ultrafiltration membrane to provide a protein rich retentate and a deproteinized mineral-containing lactose rich permeate.

The dried products of the present invention are preferably based on certain deproteinized whey byproduct solutions. As used herein, the term "whey byproducts" is intended to encompass the low molecular weight second fraction obtained from the molecular sieve fractionation of whey as described in U.S. Reissue Patent No. 27,806, the permeate obtained from the ultrafiltration concentration of protein from whey, and delactosed permeate.

The low molecular weight second fraction is the material obtained by passing a partially delactosed cheese whey mother liquor through a bed of molecular sieve resin in accordance with Reissue Patent No. 27,806 and recovering, for the purposes of this invention, the low molecular weight second fraction containing mainly lactose, minerals and residual protein. The molecular weight cut-off of the gel is preferably 30,000. The partially delactosed whey mother liquor is obtained by concentrating raw cheese whey by conventional means to a solids concentration of about 60%, reducing the temperature of the concentrate to induce lactose crystallization and thereafter separating crystalline lactose from the liquid by conventional means.

If desired, the whey can be pretreated to clarify the whey using processes such as illustrated by that disclosed in U.S. Patent No. 3,560,219. In accordance with this patent, lipid is removed as a precipitate from whey by treating the whey solution with a calcium ion at approximately a neutral pH.

Preferably, the whey stream used in the gel filtration fractionation of whey is clarified prior to delactosing. The preferred method of clarification is the process described in U.S. Patent No. 3,560,219 for sweet whey. For acid whey, the preferred clarification method is that shown in U.S. Patent No. 4,036,999, the disclosures of which are incorporated herein by reference.

Also effective in the present invention is the permeate obtained from the ultrafiltration of cheese whey solutions. Ultrafiltration membranes are utilized to separate the high molecular weight protein and non-protein nitrogen compounds (below about 20,000 molecular weight); and ash in the whey solution. The protein enriched solution is retained on the membrane and it is called the retentate. The water and low molecular weight fraction passes through the membrane and is called the permeate. An illustrative method for ultrafiltration is described by Horton, B.S. et al., Food Technology, Vol. 26, page 30, 1972.

In an illustrative method for ultrafiltering cheese whey, an acid or cottage cheese whey concentrate containing from about 40% to about 60% and preferably 50%-55% whey protein is prepared by neutralizing acid whey to a pH of 6.5 with caustic. After storage, the pH is then adjusted to

7.2 and any solids or precipitates are removed by centrifugal clarification. The clarified liquor is then pasteurized and fed into the ultrafiltration membrane unit. The retentate is condensed and spray dried. The liquid permeate is then used in the process of the invention.

The permeate can be dried as is or concentrated and/or delactosed by concentration and cooling to effect a precipitation of a lactose. The permeate is a deproteinized whey solution and the delactosed permeate is a delactosed deproteinized whey solution.

The raw cheese whey source used in preparing the materials used in the invention can be acid cheese whey, sweet cheese whey, or mixtures thereof. More particularly, the raw cheese whey can be cottage cheese whey, casein cheese whey, cheddar cheese whey, mozarella cheese whey, Swiss cheese whey or mixtures thereof. Preferably, raw cheese whey used in connection with the molecular sieve fractionation is a blend of cottage cheese whey and cheddar cheese whey. The preferred cheese whey for use in the ultrafiltration fractionation of whey is acid cheese whey.

The starch, used in the present invention, can be any starch or blends thereof, modified or unmodified which is water-soluble (swellable) under the conditions of codrying. The starch is used at a level sufficient to provide a viscosity at a level sufficient to be codried in the particular

drying apparatus used. For a solution which is to be codried in an atomizing dryer such as a spray dryer, the byproduct/starch solution must have a viscosity low enough to allow atomization, i.e., less than 125 cps. The starch used in the forming a solution for spray drying is characterized by a thin, hot viscosity (thin-boiling) and little or no tendency to gel upon cooling. A starch which gels at the drying temperature can be effectively dried in non-atomizing dryers illustrated by drum dryers.

The starch can be derived from any starch source such as cereal grains, i.e., corn, waxy corn, wheat, sorghum, rice; tubers, or roots of such plants as cassava (tapioca), potato or arrowroot and the pith from the sago palm. For the atomization dry method, starches with an amylose content of below about 25% are preferred. More preferably the molecular weight of the amylose in the starch is greater than that of the amylose of corn starch. The preferred low amylose types of starches can be illustrated by waxy corn starch. Tapioca starch is most preferred since it has both low amylose content and the high molecular weight amylose.

The starch can be modified or non-modified. Modification includes genetic modification (waxy corn or waxy sorghum), starch conversion, cross-linking, derivation, and physical treatment. Starch conversions are the most common method of modifying starch. Conversions are processes which reduce the viscosity of the raw starch when cooked by scission of the molecule at the glucosidic linkage. The conversions are generally run on starch

granules for ease of recovery. Conversions on cooked starch are generally used for enzyme conversion, thermal conversion and in the production of syrups and glucose. Whole granules are used in making thin boiling or fluidity starches by acid conversion, oxidized starches, white dextrins, British gums and yellow dextrins.

Thin-boiling starches are made by controlled acid hydrolysis of starch in the granular state at about 52°C. using sulfuric or hydrochloric acid as catalyst. Cold water stability is dependent on the amount of amylose in the starch. Thin-boiling starches from corn starch can form rigid gels on cooking but stable and fluid sols from waxy corn.

Oxidized starches are prepared by treating an aqueous suspension of starch with sodium hypochlorite.

When partial or complete cold water solubility of a starch is desired, dry conversions or dextrinizations are used. Generally, a powdered starch of 5-20% moisture is prepared by treating a starch with an acid or buffer, drying, heating for pyroconversion, cooling and packing. Three stages are involved, hydrolysis, transglucosidation and repolymerization. Three basic types of products are formed using this method, i.e., white dextrins, British gums and yellow dextrins.

The maintenance of a maximum viscosity of starch without a substantial reduction in viscosity over an extended cook time is accomplished by cross-linking. Cross-linking is generally used with starches used in thickening and stabilizing.

The starch granules are treated with di- or polyfunctional reagents capable of reacting with the hydroxyl groups in the starch molecule such as mixed anhydride of acetic and citric acid or adipic acid, meta phosphates, phosphorus oxychloride, epichlorohydrin and the like. Only a few crosslinks are necessary to toughen the starch granules.

Derivation includes reacting the hydroxyl groups of the starch with various chemical agents to change the characteristics of the starch. Physical treatment includes redrying, blending with additives, such as tricalcium phosphate as a flow control agent, precooking (pregelatinized starch), drum drying ground flakes (water soluble) and spray drying cooked starches.

One major converted product area is syrups and sugars. Two types of reactions are used, acid catalyzed hydrolysis or enzyme hydrolysis. The conversions can prepare products having Dextrose Equivalents or D.E. (Basic measure of conversion) ranging from very low to 75% and higher. Pure dextrose has a D.E. of 100. For purposes of the present invention, products with a D.E. of about 30 and preferably about 15 or less are useful.

The type of starch utilized depends on the physical and chemical characteristics of the starch, the amount used, and the end use of the product. The preferred starch is a low amylose modified tapioca starch which is thin boiling and has little tendency to gel on cooling.

The blend of the deproteinized whey byproduct solution and starch can be codried by any known means depending on the starch utilized. Preferably,

an atomizing type dryer is utilized. By atomizing dryer is meant any conventional dryer which effects drying of liquid by reducing or atomizing the liquid feed stream containing dissolved or suspended solids to droplet form in the presence of a drying atmosphere. This type of dryer is illustrated by a spray dryer, fluid bed dryer or flash or vacuum dryer. More particularly, the term "spray dryer" includes vertical spray dryers, horizontal spray dryers and filter mat dryers. The atomizing dryer generally includes a main drying chamber, an atomizer, e.g., a spray nozzle, adapted to feed the material to be dried into a drying atmosphere in the dryer chamber. As used herein, drying atmosphere is also intended to cover a negative pressure atmosphere such as used in a flash or vacuum evaporator.

In a conventional spray dryer, the inlet air stream is generally heated to effect drying. The inlet temperature is usually heated within the range of from about 168°C. to about 182°C. The corresponding outlet temperature usually ranges from about 110°C. to about 116°C. The temperature in the dryer is not critical with the exception that the temperature must be high enough to effectively dry the product yet insufficient to cause burning or browning. High product temperature without effective means of dissipating the heat can cause lumping. The parameters of the dryer as well as the conditions generally employed such as feed rate, residence time and the like can be easily discerned by one skilled in the art.

If the starch tends to gel at higher temperatures, the drying must be accomplished under low temperature conditions to avoid gelation of the starch. Air

drying, vacuum drying or freeze drying can be used. Other dryers such as drum dryers can also be used depending on the characteristics of the starch utilized.

If desired, one can also include a small proportion of a drying agent or a flow control agent selected from the group consisting of tricalcium phosphate, dicalcium phosphate, kaolin, diatomaceous earth, silica gel, calcium silicate hydrate and mixtures thereof.

The blend of the whey byproduct solution and the starch dries with greater facility and is less hygroscopic than the whey byproduct alone allowing it to be more easily bagged. The starch codried product is substantially non-caking which facilitates the use of the product. Flavors, colors, emulsifying agents, stabilizers and the like can also be dissolved in the solution of the whey byproducts and starch and codried herewith.

Other proteins (up to 25%) such as dairy proteins including whey, delactosed whey, whey protein concentrates, whey precipitates prepared by the processes of U.S. Patent Nos. 3,560,219 and 4,036,999 and the like or vegetable proteins such as soy can also be combined with the first composition or codried with the same and the starch though this is not preferred.

Also, functional ingredients in amounts from about 1% to about 35% by weight of dry solids of the first composition can be added in forming a final product with specific functionality. For instance, an egg albumen extender and a humectant can be prepared from at least 65% of the whey byproduct composition in combination with a member of the group of from 1% to about 15% gelatin; or from about 1% to about 15% gelatin and from about 5% to about 25% of a water soluble

polyphosphate such as sodium hexametaphosphate, the additive total of gelatin and polyphosphate not to exceed about 35%; or from about 0.5% to about 5% of a gum; or mixtures thereof and from about 0% to about 30% of a whipping aid can be added to the solution of whey byproduct prior to drying. The percentages are based on the weight of the solids in the raw whey byproduct solution exclusive of the starch.

The gelatin used in the present invention can be either of the alkaline or preferably the acid prepared type. Gelatins ranging in Bloom strength from about 100 to about 300 and preferably from about 200 to about 250 Bloom can be used. The gelatin can be predissolved in water to facilitate incorporation. Preferably, "cold-water dispersible" gelatin is used.

The water soluble polyphosphate usable in the present invention are medium chain length sequestering type polyphosphate of the formula:

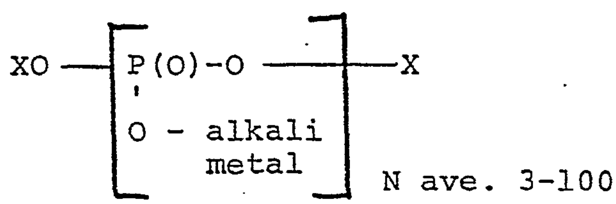

wherein X is hydrogen or alkali metal. Preferably, the average chain length (N ave.) is from 3 to 20. Representative compositions within this group are sodium or potassium tripolyphosphate, sodium or potassium tetrapolyphosphate, sodium or potassium hexametaphosphate, the more preferred being sodium hexametaphosphate (SHMP) with an average chain length of 6-18, and the most preferred 9-12.

The gums which can be used in the present invention include any of the edible gums or protective colloids such as carrageenan, alginates including sodium or potassium alginate, cellulose gums including sodium carboxymethylcellulose, methyl cellulose, hydroxymethylcellulose, hydroxyethylcellulose, hydroxypropylcellulose, hydroxymethylpropylcellulose and preferably, carboxymethylcellulose, accacia, guar, xanthan, and mixtures thereof.

The gum is preferably used in an amount ranging from about 0.5% to an amount above which the final product shows adverse properties in the area of use. In general, the gum is not to exceed about 5% by weight based on the weight of the final product (exclusive of starch), the upper limit varying depending on the actual gum utilized. In some cases, more can be used and in some cases, less. The preferred gum is carrageenan which is used in amounts ranging from 0.5% up to and including about 3% (exclusive of starch).

The optional whipping aid is illustrated by enzyme hydrolyzed wheat or soy protein which can be prepared by hydrolyzing any wheat or soy protein or wheat protein mixture such as gluten by any proteolytic enzyme effective for that purpose provided the final product has a bland flavor which will not affect the overall flavor of the egg albumen replacer. Proteolytic enzymes are well known to those skilled in the art and effective proteolytic enzymes can be easily determined by such person. While the enzymatically hydrolyzed wheat or soy protein can be used alone, it is

preferably used with a small quantity (up to and including about 20%) to thicken and stabilize the mixture, the percentage being by weight based on the total weight of the enzyme hydrolyzed wheat protein. An illustration of these materials is HYFOAMA 68 available from Naarden Lenderrink and Co., Belgium and GUNTHERS 400V available from A. E. Staley.

The former material has 60% protein, 5% water, 6% ash, and 20% carbohydrate. The enzymatically hydrolyzed wheat protein is used in amounts of from about 5% to about 30% and preferably from about 10% to about 20% by weight based on the total weight of the whey byproduct containing composition exclusive of starch. The latter material is composed of enzymatically modified soy protein (55% of total), sodium hexametaphosphate, gelatin and sodium aluminum sulfate.

The amount of starch used in the codried blend is dependent on the chemical characteristics of the starch. In general, the starch is used in an amount ranging from about 20%, preferably from about 20% to about 75% and more preferably from about 25% to about 50%, said percentages being based on the dry weight of the protein component and optional gelatin, polyphosphate, gum and whipping aid. These amounts are for the preferred low amylose type starches and may vary from starch to starch. For instance, a film forming starch can be used at 50% but not at 25% whereas a tapioca dextrin can be used at 25%.

In general, the whey byproduct can be directly blended with the starch and spray dried. The use of slightly elevated temperature assists in the

solubilization of the starch. The temperature used in this stage should not cause gelatinization or thickening of the starch prior to spray drying. A temperature within the range of from about 60°C. and 70°C. is suggested for tapioca dextrins.

The solution to be spray dried should have a viscosity which is adaptable for drying in the drying apparatus selected. For spray drying, the viscosity should be at least 125 cps at the level of solids and starch needed for effective drying. Excessive starch, or excessive solids will cause the viscosity to be too high.

It has been found that the total solids content can have an adverse effect on the preparation of a usable product. For the preparation of an effective non-caking product the total solids content of the feed to the dryer should be in the range of from about 15% to about 35% and preferably from about 20% to about 30%. These amounts may vary depending on the material being dried and the type of dryer used. Most preferably, for drying compositions of delactosed permeate, gelatin, SHMP ± starch, a total solids content of about 25% ± 2% is preferred. The adjustment in water content is preferably accomplished by adding the amount of water required to provide the desired final total solids content to the liquid whey byproduct prior to the addition of the remaining ingredients. The ingredients can be blended and the total solids adjusted after blending if desired.

The aforediscussed egg albumen extender can also be prepared by drying the solution of whey byproduct and if desired with the starch and then dry blending therewith the gelatin, gelatin and

polyphosphate, or gum. The dry product can also be dry blended with various ingredients for color, taste, function, i.e., emulsifiers, stabilizers, texturizers and the like. The first composition of the invention can be used in combination with other protein-containing products such as whey, whey protein concentrate, products derived from whey such as that shown in Attebery 3,560,219 (use of calcium ion to form a precipitate from whey at neutral pH), Grindstaff 4,036,999 (precipitate formed by neutralizing acid whey), delactosed whey, demineralized whey, NFDM, soy protein and the like. The protein can be codried with or dry blended with the product of the invention. Amounts ranging from 0% to about 25% by weight on dry solids basis can be used.

It has been found that the dried whey byproduct preferably blended with starch with or without the gelatin, SHMP, or gum when incorporated in a food product can perform the function of a humectant. Thus, the whey byproduct of the invention can be used in areas where humectants such as propylene glycol are presently in use. The products of the invention can be used as the sole humectant or in combination with other known humectants such as propylene glycol or glycerine. Effective humectant activity can be established using a sufficient amount of the humectant to provide from about 2% to about 20% by weight derived protein in said food on a dry solids basis.

The starch-containing blends of the present invention can also be used in food products as flavor enhancing agents, flavor agents or binding agents. More specifically, the blend derived from the present invention can be used in meat products, for example, soups,

stews, gravies, breadings, batters, beef patties and imitation sausages. Also, the product can be used in chip dips, cheese products such as cheese spreads, process cheese foods, spray dried cheeses, and imitations thereof and the like. The blends can also be used in non-food areas such as cosmetics. Since the starch is a significant part of the product, its selection is relevant to any specific use.

Of particular importance is the use of the first composition and particularly the codried blend with starch of the present invention as humectants in intermediate moisture foods such as semi-dry pet foods, such as that illustrated by U.S. patents 3,202,514, 3,852,483 and 4,018,909, the disclosure of which is incorporated herein by reference. The first composition or product containing the same can be used as the sole humectant or in combination with other known humectants such as propylene glycol and glycerine and can be incorporated in place of existing humectants in standard recipes. The first composition or products containing the same, particularly the preferred codried starch blend can be used in such amounts as to provide a water activity for the food of between about 0.6 and less than about 0.9 and preferably from about 0.75 to about 0.85 when measured at 30% moisture at 37°C. The actual amount used will vary depending on the ingredients present in the food such as sugars which are particularly known to have a reducing influence on water activity.

The present invention is further illustrated in the examples which follow. The tapioca dextrin as used in the examples has a Dextrose Equivalent of less than 30.

EXAMPLE 1

47.3 liters of liquid delactosed permeate (DLP) obtained from the ultrafiltration of acid whey having a total solids content ranging from about 31% to about 34% is blended with 15 milliliters of catalase solution to destroy any residual of the peroxide added to the DLP for preservation. A blend of 9.80 kilograms of starch (a tapioca dextrin, K-4484 from National Starch and Chemical Corp.) in 41.6 liters of water is added to the DLP. The temperature of the mixture is brought up to 65.6°C. and the product spray dried. The product has a ratio of DLP:Starch of about 2:1 and spray dries very well with little build-up on the dryer walls. No caking is visible after four days storage. About 30.6 kilograms of product is obtained. This product has a water activity of between about 0.6 and 0.7 at 30% moisture at 37°C.

EXAMPLE 2

37.85 liters of DLP (31%-34% TS) is blended with 15 milliliters of catalase to destroy any peroxide preservative. 54.25 liters of water is then added to the DLP and the mixture is heated to 65.6°C. A dry blend mixture of 9.08 kilograms starch (tapioca dextrin, D-4484, National Starch and Chemical Corp.), 3.405 kilograms sodium hexametaphosphate (SHMP) and 0.68 kilograms gelatin. The dry blend is added to the DLP and water spray dried. The product spray dries well with almost no build-up on the drier walls. 27.9 kilograms of a dense slightly hygroscopic powder

is obtained. The ratio of DLP/SHMP/Gelatin to starch is about 2:1. This product has an approximate water activity of about 0.65 at 30% moisture at 37°C.

## EXAMPLE 3

123 liters of DLP (31% to 34% TS) is blended with 22.7 kilograms starch (tapioca dextrin D-4484 National Starch and Chemical Corp.) and 102.2 liters of water. The blend is heated to 65.6°C. and spray dried. 67.6 kilograms of a slightly hygroscopic fine powder is obtained with a ratio of DLP to starch of about 2:1 and an $a_w$ of about 0.6 to 0.7 at 30% moisture at 37°C.

## EXAMPLE 4

Four samples of DLP/starch blends at ratios of 1.5:1, 2:1, 2.5:1 and 4:1 are prepared by blending DLP and starch (tapioca dextrin, K-4484 National Starch and Chemical Corp.) in a 19 liter container with agitation. Hot water is added to the blend. After all the starch is in solution, the mixture is heated to 65.6°C. and spray dried. The following compositions are used:

| Blend | Starch (Kilograms) | DLP (Liters) | Water (Liters) |
|---|---|---|---|
| I (1.5:1) | 2.9 | 10.6 | 2.4 |
| II (2:1) | 2.4 | 12.1 | 1.5 |
| III (2.5:1) | 2.1 | 12.9 | 0.8 |
| IV (4:1) | 1.45 | 15.1 | --- |

Blends I, II and III dry well with no noticeable build-up on the drier walls. The dry powder from blends I, II and III is a bit hygroscopic, hygroscopicity being most notable on the 2:5 to 1 blend. 7.3 kilograms of net product for Blends I and II and 2.7 kilograms of net product for Blend III is obtained. The water activities of Blends I, II and III are 0.7, 0.63 and 0.63 respectively at 30% moisture and 37°C.

The dried powder for Blend IV is quite hygroscopic. A small sample in the palm of the hand quickly picks up moisture. Only 6.4 kilograms of product is obtained.

EXAMPLE 5

One kilogram of SHMP is blended with 10.6 liters of DLP (31% to 34% TS) in a 19 liter container with agitation. 1.5 kilograms of starch (tapioca dextrin, K-4484 National Starch and Chemical Corp.) and a gelatin solution of 2.3 grams gelatin in 1.55 liters of water are blended with the DLP/SHMP blend. After all ingredients are dissolved, the mixture is heated to 65.6°C. and spray dried. The product with a ratio of DLP/SHMP/Gelatin to starch of 3:1 spray dried satisfactorily. The product is hygroscopic but less than 4:1 DLP/Starch blend of Example 4. 6.8 kilograms of product is recovered.

## EXAMPLE 6

A starch (Film Set™ JJR-214-C National Starch and Chemical Corp.) is blended with DLP (31% to 34% TS) in a 19 liter container with agitation. The blend is heated to 651.6°C. and spray dried. The following compositions are prepared.

| Blend | Starch (Kilograms) | DLP (Liters) | Ratio DLP/ Starch |
|---|---|---|---|
| I | 2.3 | 12 | 2:1 |
| II | 3.4 | 9 | 1:1 |

The product of Blend I is hygroscopic and lumpy. Some product build-up on the walls of the dryer is noticed. 4.54 kilograms of product is recovered. The product of Blend II was slightly hygroscopic. 6.8 kilograms of product is recovered.

EXAMPLE 7

A starch (Film Set™ JJR-214-C National Starch and Chemical Corp.) is blended with DLP in a 19 liter container with agitation. A solution of gelation dissolved in hot DLP and a solution of SHMP dissolved in hot water are blended with the DLP and starch. After heating to 65.6°C., the blend is spray dried. The following compositions are used:

| Blend | Starch (Kilo-grams) | (Liters) | Gelatin | SHMP | Ratio DLP/ Gelatin/SHMP: Starch |
|---|---|---|---|---|---|
| I | 2.7 | 6.8 | 163 grams in 1.66 kg hot DLP | 776 grams in 3.53 liters hot water | 1.5:1 |
| II | 4.54 | 7.57 | 182 grams in 1.85 kg hot DLP | 863 grams in 5.2 liters hot water | 1:1 |

Blend I dries reasonably well. The product is a fine powder, somewhat hygroscopic with small, hard particles. The powder starts to cake and get hard in a plastic bag a few hours after drying.

Blend II dries very well. The product is not too hygroscopic. Surprisingly, however, the powder caked badly in a plastic bag a few hours after drying.

EXAMPLE 8

A soft meringue having a pH equivalent to a commercial meringue (pH 8.2) is prepared by combining 4.6 grams of the product of the invention, 35.4 grams water and 120 grams of liquid egg albumen and then dissolving 0.3 grams of cream of tartar therein. This mixture is whipped at speed No. 3 for two minutes in a 3-quart Hobart™ Mixer. While whipping is continued for another five minutes at speed No. 3, 204 grams of granulated sugar is added at a rate of about 7 grams per 5 seconds. After the specific gravity of the foam is determined, 40 grams of foam is weighed into a 200 milliliter funnel fitted with a wire screen. The drainage in milliliters of liquid is determined after standing for 24 hours at 4.4-7.2°C. 40 grams of foam is weighed in duplicate and baked inside a 204°C. oven for 7 minutes. The specific volume of the meringue is determined after drying 24 hours at 40°C. The compositions of the invention which can be used in this example along with data characterizing the foam and meringue are presented in Table I below:

TABLE I

| Sample | Foam Specific Gravity | Foam Syneresis (Milliliters) | Meringue Specific Volume |
|---|---|---|---|
| 75% Egg Albumen/25% Product of Invention | | | |
| A-DLP:Starch* Ratio | | | |
| 1.5:1 | .2340 | 12.5 | 6.58 |
| 2.0:1 | .2306 | 12.0 | 6.76 |
| 2.5:1 | .2776 | 12.0 | 6.84 |
| B-DLP/Gelatin/SHMP: Starch* Ratio | | | |
| 1.5:1 | .2374 | 12.0 | 6.56 |
| 2.0:1 | .2331 | 13.0 | 6.72 |
| 2.5:1 | .2323 | 13.0 | 6.79 |
| Control - Liquid Egg Albumen | .2446 | 8.0 | 6.68 |

* Modified starch having low hot viscosity and little or no tendency to gel on cooling - K-4484 Tapioca Dextrin - National Starch and Chemical Corp.

No appreciable difference is noted between the DLP/Starch and DLP/Gelatin/SHMP/Starch blends. The blends consisting of lower ratios of starch function slightly better but are noted to exhibit more hygroscopicity. On an equal starch ratio, the blends containing the gelatin and SHMP are noted to exhibit less hygroscopicity.

EXAMPLE 9

The water absorption isotherms of the products of the invention are determined. At the moisture levels for intermediate moisture pet food, e.g., 20-40% moisture, the estimated water activity is

above 0.55 but below 0.75. Change in either ratio of DLP or DLP/Gelatin/SHMP to starch or the type of starch affects the water activity only slightly.

EXAMPLE 10

Three intermediate moisture pet foods are prepared to show the effectiveness of the products of the invention as humectants. The formulation used is as follows:

TABLE II

| INGREDIENT | % |
|---|---|
| Chicken Junior Baby Food | 30.1 |
| Dextrose | 28.6 |
| Soy Flour | 27.6 |
| Water | 4.8 |
| Fat | 2.4 |
| Emulsifier (Mono and di-glycerides-Atmul 80) | 1.0 |
| Potassium Sorbate | 0.5 |
| Sample A-Propylene Glycol (Control) | 5.0 |
| Sample B-Liquid DLP | 4.8 |
| Sample C-DLP/Starch (Tapioca Dextrin)-2:1 ratio | 2.9 |

The baby food, a retorted blend of chicken, chicken broth and cooked chicken and the water is weighed into a stainless steel mixing bowl. The mixture is heated to 70°C. The emulsifier, fat, potassium sorbate and the liquid DLP or the propylene glycol are then added. Heating is continued until the ingredients are dissolved. The dextrose and

soy flour and, if present, the DLP/Starch product are dry blended and the liquid system is then added to the dry system. The resultant blend is kneaded into dough and shaped into pellets having a diameter of 1.9 centimeters and a height of 1.27 centimeters. The pellets are stored in water impermeable containers.

The water activity of the Samples is determined with the following results:

| SAMPLE | WATER ACTIVITY | % MOISTURE |
|---|---|---|
| A (Control) | 0.80 | 29.3% |
| B (L. DLP) | 0.83 | 27.1% |
| C (DLP/Starch) | 0.825 | 24.7% |

EXAMPLE 11

The procedure of Example 10 is repeated using 7.5% of the 2:1 blend of DLP and starch (Tapioca Dextrin). The dough is very pliable, has good plasticity and appears better than the product of Example 10C.

CLAIMS:

1. Products which exhibit reduced water activity comprising a codried blend of a first composition which comprises at least 65% of a derived protein-containing composition from plant or animal sources wherein the molecular weight of said derived protein-containing composition is less than 30,000, said composition having a total Kjeldahl nitrogen content of from about 0.45% to about 2.1% of which at least 60% of the nitrogen is non-protein nitrogen, from about 0% to about 35% of a member selected from the group consisting of from about 1% to about 15% gelatin; from about 1% to about 15% gelatin and from about 5% to about 25% of a water soluble polyphosphate, the additive total of gelatin and phosphate not to exceed about 35%, from about 0.5% to about 5% of a gum, and mixtures thereof; and from about 0% to about 30% of a whipping aid, all percentanges unless otherwise stated being by weight on the total weight of said first composition, and from about 20% to about 75% by weight based on the dry weight of said product of a starch which is soluble or swellable under the conditions of drying.

2. The product of Claim 1 wherein said derived protein-containing composition is selected from the group consisting of the low molecular weight fraction obtained by the gel fractionation of whey, the permeate resulting from the ultrafiltration of concentration of whey and the delactosed permeate resulting from delactosing the said permeate.

3. The product of Claim 2 wherein said derived protein-containing composition is the permeate resulting from the ultrafiltration of whey.

4. The product of Claim 3 wherein permeate is delactosed.

5. The product as recited in Claim 1 wherein said starch is a thin-boiling starch.

6. The product as recited in Claim 5 wherein the starch is tapioca dextrin.

7. The product as recited in Claim 1 which comprises at least 0.5% of said member.

8. The product as recited in Claim 7 wherein said member is gelatin and polyphosphate.

9. The product as recited in Claim 8 wherein said polyphosphate is sodium hexametaphosphate.

10. The product of Claim 8 wherein said derived protein-containing composition is the delactosed permeate resulting from the ultrafiltration of whey.

11. The product of Claim 10 wherein said starch is a tapioca dextrin.

12. The product of Claim 11 wherein said starch is present in an amount ranging from about 25% to about 50%.

13. The product of Claim 1 which has a water activity ranging from about 0.5 to about 0.8 at 30% moisture at 37°C.

14. The product of Claim 13 which has a water activity ranging from about 0.55 to about 0.75 at 30% moisture at 37°C.

15. An intermediate moisture food prepared using as at least part of the humectant the product of Claim 1.

16. The food as recited in Claim 15 which is a pet food.

17. An intermediate moisture food prepared using as at least part of the humectant, a first composition which comprises at least 65% of a derived protein-containing composition from plant or animal sources wherein the molecular weight of said derived protein-containing composition is less than 30,000, said composition having a total Kjeldahl nitrogen content of from about 0.45% to about 2.1% of which at least 60% of the nitrogen is non-protein nitrogen, from about 0% to about 35% of a member selected from the group consisting of from about 1% to about 15% gelatin; from about 1% to about 15% gelatin and from about 5% to about 25% of a water soluble polyphosphate, the additive total of gelatin and phosphate not to exceed about 35%, from about 0.5% to about 5% of a gum, and mixtures thereof; and from about 0% to about 30% of a whipping aid, all percentages unless otherwise stated being by weight on the total weight of said first composition.

18. The food as recited in Claim 17 which is a pet food.

19. The food as recited in Claim 17 wherein said derived protein-containing composition is selected from the group consisting of the low molecular weight fraction obtained by the gel fractionation of whey, the permeate resulting from the ultrafiltration of concentration of whey and the delactosed permeate resulting from delactosing the said permeate.

20. The product of Claim 19 wherein said derived protein-containing composition is the permeate resulting from the ultrafiltration of whey.

21. The product of Claim 19 wherein permeate is delactosed.

22. The product of Claim 19 which has a water activity ranging from about 0.6 to less than about 0.9 at 30% moisture at 37°C.

23. The product of Claim 22 which has a water activity ranging from about 0.75 to about 0.85 at 30% moisture at 37°C.